(19) Europäisches Patentamt / European Patent Office / Office européen des brevets

(11) **EP 3 127 720 B1**

(12) **EUROPEAN PATENT SPECIFICATION**

(45) Date of publication and mention
of the grant of the patent:
**14.04.2021 Bulletin 2021/15**

(51) Int Cl.:
***B60C 23/00*** *(2006.01)*

(21) Application number: **16178898.9**

(22) Date of filing: **11.07.2016**

(54) **VEHICLE COMPRISING AN AIR SUPPLY SYSTEM**

FAHRZEUG MIT EINEM LUFTZUFUHRSYSTEM

VÉHICULE AVEC UN SYSTÈME D'ALIMENTATION EN AIR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.08.2015 GB 201513660**

(43) Date of publication of application:
**08.02.2017 Bulletin 2017/06**

(73) Proprietor: **AGCO International GmbH
8212 Neuhausen am Rheinfall (CH)**

(72) Inventor: **Hoeldrich, Bernhard
87616 Marktoberdorf (DE)**

(74) Representative: **AGCO Intellectual Property
Department
AGCO Limited
Abbey Park Stoneleigh
Kenilworth, Warwickshire CV8 2TQ (GB)**

(56) References cited:
**WO-A1-2015/028170    DE-A1-102012 106 549**

**Description**

The invention relates to a vehicle comprising an air supply system for supplying air to an on board consumer and a tyre.

Vehicle air supply systems require air dryers to discharge humidity from the air before supplying it to consumers on a vehicle. Damp air can cause corrosion in pipes and other components on the vehicle, so before supplying air to consumers, or air reservoirs (for example, for the vehicle's brake system) the air is usually guided through a dryer. When the air is passing through the dryer to dry the air, this mode of operation is known as a drying mode.

Due to the restricted load capacity of dryers, a second operation mode, known as a regeneration mode is required which involves passing air through the reservoir in an opposite direction and discharging it to the atmosphere. A regeneration mode thus removes water deposited in, or on the drying material of the dryer.

It is known to use double chamber dryers which comprise two separate dryer reservoirs, so that if one chamber is drying the air from the compressor in a drying mode, the other chamber is in a regeneration mode. The shift between the two modes of each drying chamber is time-controlled, so that the dryer may continually be used to dry air.

Furthermore, Electrically Operated Air Dryers (EOD) are also known. These dryers only require one dryer portion and the shift between the two modes of operation, that is the switch between the regeneration mode and the drying mode is not time controlled by a control unit. The two modes are controlled by measuring the volume of air passing through the dryer by measuring the compressor time or measuring the pressure rise in the reservoirs (and knowing that a certain pressure rise requires a predetermined air volume). A percentage of the volume of air in the air supply system is then guided back for the regeneration.

Even if the usage of EODs reduces regeneration time, a percentage of the volume of air (approximately 12%) is still required for regeneration and is not available for the general air supply to components. For example, after drying 1000 litres of air within an air supply system, 12% of the volume, that is 120 litres must be used for regeneration. The efficiency of the system is therefore reduced.

Most air supply systems suffer from the fact that air is lost during longer periods of shut down of the vehicle, such as overnight. Each on board air consumer is provided with a respective reservoir which suffer from leaks when air under high pressure is stored in them for prolonged periods. After starting the vehicle again, some initial time is required for the compressor to be able to replenish the consumer reservoirs ready for operation. This is inefficient.

A vehicle according to the precharacterising part of claim 1 is known from WO 2015/028170. A vehicle comprising an air supply system for supplying air to an on board consumer and a tyre, said air supply system comprising an air compressor and a dryer connectable to the tyre is also known from DE 10 2012 106 549 A1.

It is an aim of the invention to provide a vehicle comprising an air supply system with a main air reservoir which can be used during long periods of shut down of the vehicle to reduce the overall leakage of air from the system during a shut down period. It is a further aim that the system upon re start of the vehicle can fill the reservoirs of on board consumers from the main air reservoir without necessitating a compressor.

It is yet a further aim of the invention to provide an efficient means for holding dry air on the vehicle in which the air discharged from the main air reservoir is used for the regeneration of an air dryer in the air supply system.

According to the invention there is provided a vehicle comprising an air supply system for supplying air to an on board consumer and a tyre, said air supply system comprising an air compressor and a dryer connectable to the tyre, and said on board consumer having a respective consumer reservoir;

characterised in that said consumer reservoir is equipped with a respective pressure sensor, and in that the air supply system is configured to:

   prior to shut down of the vehicle, increase the pressure in the tyre;
   upon starting the vehicle, measure by the pressure sensor the pressure in the consumer reservoir; and if the pressure in the consumer reservoir is lower than a desired pressure, use deflated air from the tyre to increase the pressure in the consumer reservoir. In this way the tyre is used as a main air reservoir during long periods of shut down of the vehicle, such as overnight. The air supply system can determine the pressure of a consumer reservoir before shut down. If the consumer reservoir is at a high pressure, the tyre may be inflated to a pressure which is higher than its usual pressure during operation using the air from the consumer reservoir. The vehicle can then be shut down.

Preferably, if the pressure measured in the consumer reservoir by the pressure sensor does not reach the desired pressure in the consumer reservoir using the deflated tyre air, the compressor is used to fill the consumer reservoir to the desired pressure. Preferably, the air supply system is further configured such that the compressor is deactivated during increasing the pressure in the consumer reservoir using deflated air from the tyre.

The vehicle preferably comprises a tyre pressure control system circuit and a dryer circuit the dryer circuit comprising the dryer, a flow return valve and a port, the dryer and the flow return valve are arranged so that air supplied by the compressor to the tyre is dried, the port is connectable to the tyre pressure control system circuit so that air deflated from the tyre through the tyre pressure control system circuit either i) passes through the dryer for regeneration, or ii) is supplied directly to the on board consumer on the vehicle.

This way air deflated from the tyre which is already dry can be used for the regeneration of the dryer, or supply a consumer on the vehicle.

Preferably the air taken from the tyre is provided by a reservoir located within the tyre.

In the case of a wheel comprising both an inner tyre and an outer tyre and comprising two reservoirs located on the wheel, air taken from one of these reservoirs may be used for regeneration of the dryer without affecting the pressure of the other reservoir.

A Tyre Pressure Control System (TPCS) used on agricultural tractors is able to determine the air flow (and therefore any increase or decrease in air volume over a time interval) as described in WO 2015/028214. The air supply system can store a characteristic map of the relationship between a change in tyre pressure and a change in air volume as the tyre is inflated or deflated. For example, for a desired tyre pressure, the system will calculate the volume of air which must be added or subtracted to reach the desired pressure.

The invention will now be described, by way of example only, with reference to the following drawings in which:

> Figure 1 is circuit diagram of a Tractor Pressure Control System and an Electrically Operated Air Dryer on a vehicle according to the invention,

> Figures 2a-2d are circuit diagrams of known modes of operation of an Electrically Operated Air Dryer,

> Figures 3 and 4 are circuit diagrams of the Electrically Operated Air Dryer showing different modes of operation in accordance with the invention, and

> Figure 5 is a circuit diagram of an alternative Tractor Pressure Control System with an Electrically Operated Air Dryer on a vehicle according to the invention.

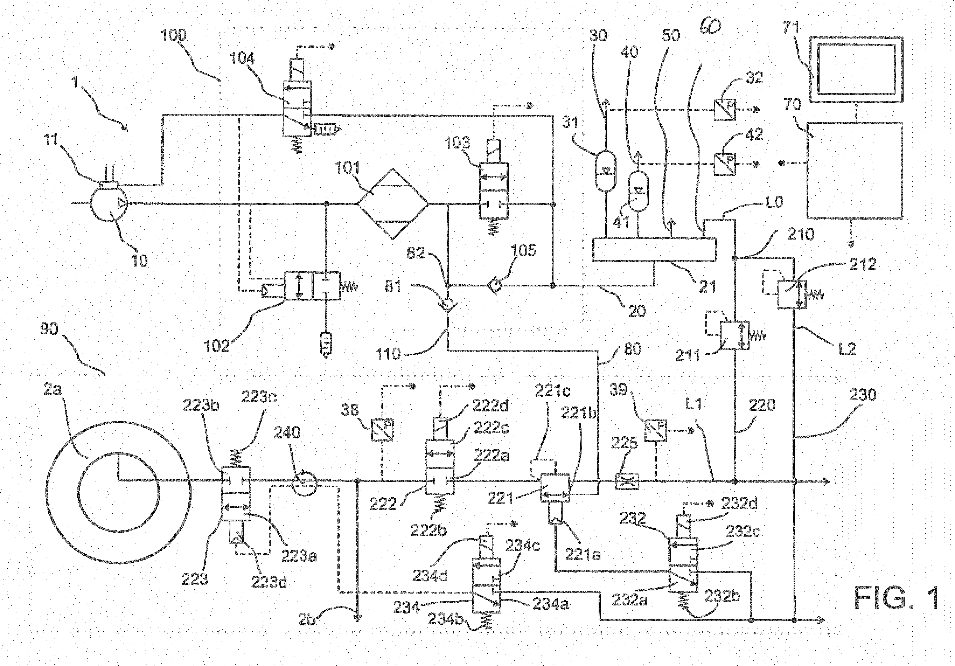

Figure 1 shows a circuit diagram of a Tractor Pressure Control System (TPCS) 90 and an Electrically Operated Air Dryer (EOD) 100 on a tractor 1 having one wheel 2a fitted with a tyre. Further tyres (not shown) are connectable to the TPCS as indicated by arrow 2b. The tractor 1 is provided with a wheel 2a connected to the TPCS for inflation and deflation of its tyre. For the avoidance of doubt, the term deflation means that air is let out of the tyre. The term deflated air thus means the air which has been let out from the tyre. A compressor 10 supplies air to components on a vehicle via the EOD. The EOD is connected to various consumers 30, 40, 50, 60 and the TPCS 90 via a consumer branch 20 and protection valve means 21. Reservoirs 31, 41 are assigned to consumers 30, 40 and are equipped with pressure sensors 32, 42 to measure their pressure. Consumers 50 or 60 may also be equipped with respective reservoirs or sensors. Generally the reservoirs are kept at a defined pressure level, for example 8.5 bar to ensure that they can deliver the required air pressure when required, for example during braking.

Protection valve means 21 balances the pressure required to be supplied to the primary set of consumers 30, 40 and the secondary consumers 50, 60 and will cut the supply to any consumer should a consumer develop a leak. In this way, the integrity of the remaining (primary) consumers is maintained. Furthermore, protection valve means 21 ensures that supply to primary consumers is prioritised over the supply to secondary consumers, such as the TPCS. In tractors or trucks, primary consumers 30 and 40 may be parallel brake circuits for a dual-circuit service brake. Secondary consumers 50, 60 may be a parking brake, an air suspension of the cab and wheels, or the TPCS.

The components of the TPCS 90 are explained in detail:

Generally, the TPCS comprises two separate circuits which represent two functions of the system.

One circuit is the supply circuit 220 which is branched off the main TPCS line L0 at connection 210 for connecting supply line L1 to wheel 2a to supply air to the respective tyre. This circuit must be capable of high air flow rates at high pressures to ensure fast inflation of a tyre.

A second circuit, control circuit 230 is also branched off the main TPCS line L0 at connection 210 to connect with pilot control line L2. The control circuit 230 activates the deflation and inflation process by components of the supply circuit 220.

Control circuit 230 mainly contains pilot valves which for clarity are omitted in Figure 1. Various pilot valve configurations may be used, as for example, those shown in WO2015/028214. In figure 1 the pilot control valves 232 and 234 are provided for pneumatically controlling main control valve 221 and second stop valve 223 of the supply circuit 220. All components of the control circuit are specified for low air flows as the pilot function requires only low air flows. The lower pressures and air flow in control circuit 230 enables the use of smaller and cheaper components, especially valves, which improves procurement, costs and installation space. Furthermore, the use of low pressures enable greater accuracy when sensors are installed, as the accuracy is decreased by a greater range of operation.

To maintain the different pressure levels in both circuits 220, 230 excess flow valves 211, 212 are provided. If the pressure level exceeds the set level in the TPCS circuit, the connection is blocked to protect the components of the TPCS. For example, excess flow valve 211, assigned to supply circuit 220 may be set to a maximum pressure between 7.1 to 7.5 bar, hereinafter referred to as the supply pressure. Excess flow valve 212, assigned to pilot control circuit 230, may be set to a maximum pressure between 4.5 to 5 bar, hereinafter referred to as the pilot control pressure.

The supply circuit 220 is provided with a main control valve 221 to regulate the pressure in the tyre. The main control valve 221 is controlled by pilot valve 232. Port 221a is connected to pilot control valve 232 which has two operating conditions for providing pilot control. Pilot control valve 232 is biased into a closed position 232a by a spring means 232b and can be moved to an open position 232c to allow air flow. In the closed position 232a, port 221a is connected to the atmosphere. The valve 232 may be moved into the open positon 232c against the force of the spring 232b by energising solenoid 232d which is electrically connected to control unit 70. For clarity reasons, the electric connections to the control unit 70 are only indicated by a double arrow.

Main control valve 221 has two operating conditions:
In a first condition, the tyre of wheel 2a is connected to the air supply via main TPCS line L0 and supply line L1 for inflation of the tyre. In a second condition (shown in Figure 1) the tyre of wheel 2a is connected to the atmosphere via port 221b for deflation. With respect to the inflation operation, main control valve 221 is provided with a feedback via line 221c which ensures that the pressure level in the supply circuit after the main control valve 221 does not exceed 4.5 - 5 bar as the pressure in line 221c counteracts against the pressure coming from the control circuit 230 via the valve 232 which is set to a maximum of 4.5 - 5 bar. This balancing ensures that the tyres are not charged with more than 5 bar representing an acceptable level. On the other hand, the higher pressure (adjusted to a maximum of 7.5 bar by excess flow valve 211) in the supply circuit 220 prior to main control valve 221 increases the performance of the TPCS. For clarity reasons, the electric connections to the control unit 70 are only indicated by a double arrow.

A first stop valve 222 is positioned between the main stop valve 221 and the wheel 2a to allow inflation and deflation of the tyre. First stop valve is biased into closed position 222a by a spring means 222b and can be moved to an open position 222c to allow air flow. The valve 222 may be moved into the open positon 222c against the force of the spring 222b by energising solenoid 222d electrically connected to control unit 70. For clarity reasons, the electric connections to the control unit 70 are only indicated by a double arrow. Between valve 222 and a rotatable passage 240 located in the trumpet housing of the wheel, the supply line L1 branches off to another tyre or tyres on the tractor, as represented by the arrow 2b.

Each wheel has a respective rotatable passage 240 which connects the supply line L1 in circuit 220 to the wheel 2a. Supply line L1 is static relative to a second stop valve 223 located on the wheel. Second stop valve 223 is controlled pneumatically and can be moved into two positons, open position 223a and closed position 223b biased by spring means 223c. Valve 223 is operated by charging port 223d via the control circuit 230. By charging port 223d, valve 223 can be moved against the spring 223c into an open position 223a to connect the interior of the tyre to the supply line L1. Port 223d is connected to pilot control valve 234 which has two operating conditions for providing pilot control. Pilot control valve 234 is biased into closed position 234a by a spring means 234b and can be moved to an open position 234c to allow air flow. In the closed position 234a, port 223d is connected to the atmosphere. The valve 234 may be moved into the open positon 234c against the force of the spring 234b by energising solenoid 234d which is electrically connected to control unit 70. For clarity reasons, the electric connections to the control unit 70 are only indicated by a double arrow.

By charging port 223d via pilot control valve 234, valve 223 can be moved against the spring 223c into an open position 223a to connect the interior of the tyre to the supply line L1.

During operation of the tractor and when the TPCS is in a stand-by mode, second stop valve 223 is in a closed position to close the tyre volume.

The term operation of the vehicle or machine is defined herein as meaning that the vehicle or machine is in a condition that its system or systems are sufficiently powered to for operation, for example, with the engine running. The term shut down of the vehicle is defined herein as meaning that the tractor is in a condition that its system, or systems are not sufficiently powered for operation, for example when the ignition key is removed and the driver leaves the tractor.

Referring to TPCS the term stand-by mode is defined herein as meaning that the TPCS is in a condition wherein no change in tyre pressure is done by the driver or an automatic control system but measurements or monitoring functions may still function. The TPCS Active mode is characterised by any change in tyre pressure.

If the vehicle is not in operation (shut down), TPCS is also out of operation as supply of any electric or pneumatic energy supply is cut. Consequently, in this condition the TPCS is not in stand-by, nor in Active mode.

If the tyre pressure is adjusted (by manual input by the driver or an automatic control system), first and second stop valve 222, 223 are moved to their open positions 222a and 223a.

If the tyres are inflated (tyre pressure is increased), main control valve 221 is adjusted so that the tyre is connected to the main TPCS line L0 and the tyre is charged with air. Depending on the design, the pressure adjustment may be done in two ways. Main control valve 221 is fully opened until the tyre pressure, monitored by first pressure sensor 38 reaches the demanded value. Alternatively, main control valve 221 is opened to a position corresponding to the required pressure and closes when the value is reached.

In case of deflation, main control valve 221 may be moved into a position in which the valve 221 is connected with the atmosphere at port 221b and air is discharged until the demanded pressure value, monitored by first pressure sensor 38, is reached.

At the end of any inflation or deflation process, second stop valve 223 is moved to a closed position.

To measure the current tyre pressure $P_c$ of the tyre, the second stop valve 223 is opened so that air from the tyre flows from the tyre along supply line L1 to first stop valve 222. If the opening and closing of the second stop valve 223 is controlled by a tractor control unit 70, the second stop valve 223 can be opened automatically for a defined period of time before closing to achieve a static pressure in the respective supply line. The pressure in the supply line between the tyre and the first stop control valve 222 can be measured by pressure sensor 38 which represents the pressure in the tyre.

The restriction 225 is used to determine the pressure differential. The pressure sensor 38 thereby provides the pressure in the supply line between the restriction 225 and main control valve 221 while a second pressure sensor 39 measures the pressure of the other side of the restriction 225. Both sensors are used to calculate the pressure differential $\Delta p$ across the restriction 225. In this case, sensors 38, 39 measure the dynamic pressure within the arrangement.

Main control valve 221 and stop valve 222 are fully opened during inflation and pressure measurements taken by sensors 38, 39 are not influenced as the pneumatic resistance is known and is approximately constant. Using a separate restriction 225 has the major advantage that the pressure differential is increased which increases the accuracy of the measurement.

By calculating the pressure differential $\Delta p$, the air flow rate Q of the air being supplied to the tyre can be calculated. By air flow rate Q, it is meant the volume of air passing a given point per unit time. The relation of pressure differential, $\Delta p$ and air flow rate, Q across a restriction depends on various parameters including fluid viscosity, fluid compressibility and the geometry of the restriction. The theoretical basis of the relationship between pressure differential, $\Delta p$ and air flow rate, Q are described in various publications and considered to be general engineering knowledge so that further detailed explanation is not necessary.

For the embodiment described herein, the parameters can be summarised in a constant, C since the geometry of the restriction is known and remains constant and the fluid parameters mentioned above do not vary significantly within the operational range of the TPCS.

This results in a simplified equation:

$$Q = C \times \sqrt{\Delta p}$$

If C cannot be considered to be constant, the relation between air flow rate, Q and pressure differential $\Delta p$ could also be taken from tyre characteristic maps stored in the tractor control unit or TPCS control unit.

The tyre pressure difference, $\Delta p_T$ which the tyre has to be increased by to achieve the desired pressure, $P_d$ is calculated by subtraction of the desired tyre pressure, $P_d$ from the current tyre pressure, $P_c$. For a tyre with known dimensions, a relationship between the tyre pressure difference $\Delta p_T$ and the necessary increase in tyre air volume $\Delta V$ can be derived in order calculate the volume of air needed to be supplied to achieve the desired tyre pressure, $P_d$. This relationship is considered to be general engineering knowledge that the skilled person would know so that further detailed explanation is not necessary.

A characteristic map is stored in the tractor control unit or TPCS control unit which provides the relationship between the tyre pressure difference, $\Delta p_T$ and tyre air volume increase, $\Delta V$ across the operational range of the TPCS. Knowing the relationship between tyre pressure difference $\Delta p_T$ and tyre air volume increase $\Delta V$ for tyre inflation, the same can be applied when the tyre is deflated. So a characteristic map can be stored for both tyre inflation and deflation.

Details of the air supply, especially the function of compressor 10, EOD 100 and the consumer branch 20 are now explained.

Compressor 10 is equipped with idler means 11 to provide an idle mode in which the air flow is reduced to a rate of 15% of the maximum air delivery of 1000 litres per minute. Alternatively, this efficiency function may be provided by an OFF/ON clutch cutting mechanical drive of compressor 10. Furthermore, the compressor 10 may be electrically driven and the electric supply may be switched off by idler means 11.

The EOD 100 comprises a dryer 101 comprising a cartridge filled with drying granules, a discharge valve 102, a regeneration valve 103, a compressor idler valve 104 and a check valve 105. For clarity reasons, the electric connections of valves 102, 103 and 104 to the control unit 70 are only indicated by a double arrow. The granule cartridge extracts water from the air passing through it.

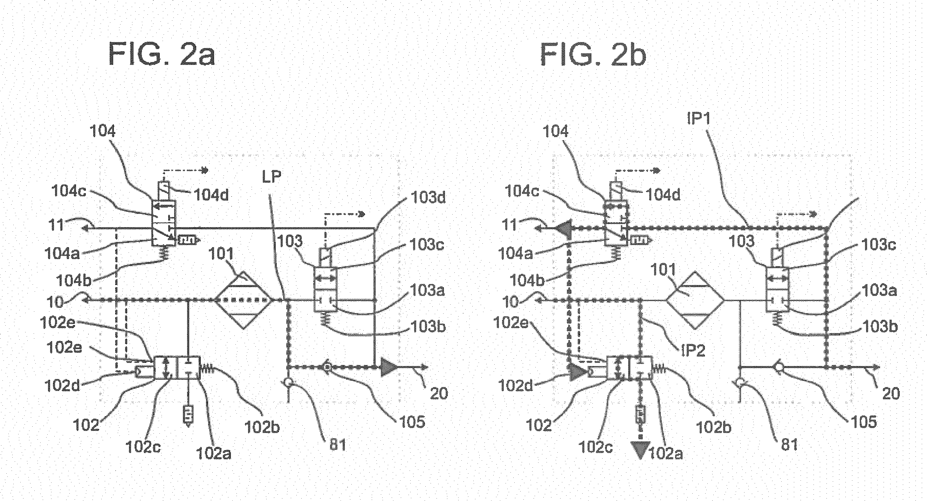

With reference to figures 2a to 2d, the standard operating modes of the EOD are now explained:

Loading mode (Figure 2a)

When a consumer requires air, air from compressor 10 flows to the consumer branch 20 via dryer 101 and check valve 105 as shown by the dotted path LP. During loading, discharge valve 102 is in its closed position 102a biased by spring 102b, as shown in figure 2a. The dryer regeneration control valve 103 and idler valve 104 are also in their closed position 103a/104a biased by springs 103b/104b. Air flow in an opposite direction, that is from the consumer branch 20 to compressor 10 is prohibited by check valve 105.

Idle mode (Figure 2b)

If the consumer branch 20 is provided with sufficient air flow, the pressure is about 8.5 bar (this pressure is measured by sensors in reservoirs 31, 41). If this pressure is exceeded because compressor 10 is still working, the control unit 70 switches the compressor idler valve 104 from the closed position 104a (biased by spring 104b) to the open position 104c by energising solenoid 104d to guide the air along path IP1 from the consumer branch 20 to the compressor idler 11. After compressor idler valve 104, the air flow is branched-off via port 102d to move discharge valve 102 to open position 102c for connection of the compressor 10 to the atmosphere. The compressor idler 11 keeps the compressor 10 in this energy saving mode as long as pressure is applied. For normal operation, the compressor idler 11 must be connected to the atmosphere and this is done by valve 104 when in closed position 104a.

Thereby the remaining air flow (approximately 15% of the volume of air in the system) is discharged to the atmosphere with minimum resistance via discharge valve 102 along path IP2.

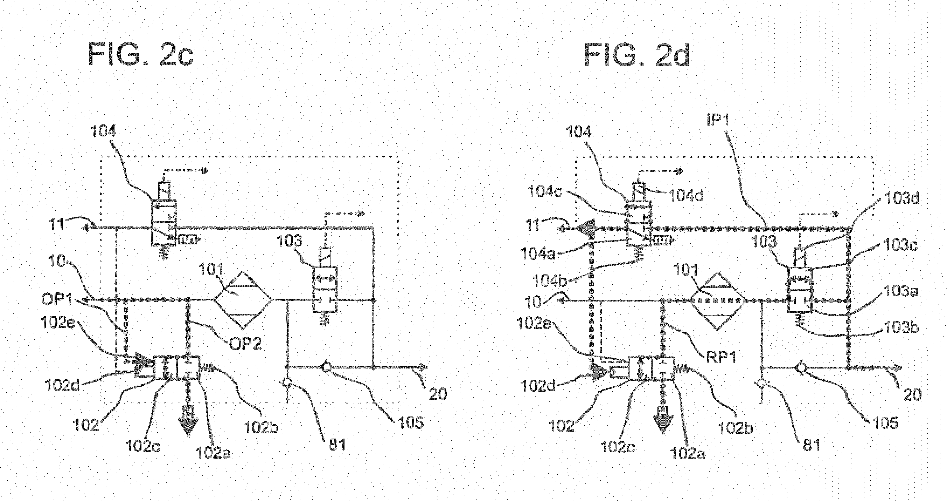

Overpressure protection (Figure 2c)

If the pressure in the EOD circuit rises to a level above a permitted operating pressure, discharge valve 102 is opened via path OP1 so that the connection of the compressor 10 to the atmosphere is opened (indicated by path OP2). This function is a safety function when the electronic control fails or a blockage occurs which would also result in an incorrect pressure detection at pressure sensors 32,42.

Regeneration (Figure 2d)

Regeneration through the cartridge of dryer 101 may be achieved by using air from consumer reservoirs 31, 41 or any other reservoir connectable in a similar manner. For example, the EOD 100 may be provided with its own regeneration reservoir. Compressor idler valve 104 is opened to position 104c first so that the compressor 10 is brought into the idle mode (as explained above for the IDLE MODE) and air flows along path IP1.

In addition, regeneration valve 103 is moved from its closed position 103a (biased by spring 103b) to the open position 103c by energising solenoid 103d so that air from reservoir 31, 41 can by-pass the check valve 105 and enter the cartridge of dryer 101 along path RP1. As discharge valve 102 is already opened to position 102c via path IP1 and port 102d, the air regenerating the dryer cartridge 101 and the air coming from the compressor 10 in the idle mode is discharged to the atmosphere.

As already discussed above, the regeneration process requires a defined air flow which is taken from consumer reservoirs 31, 41 or reservoirs integrated in the dryer (not shown in the embodiment above). This reduces efficiency as this air flow is then not available for supplying consumers.

As shown in Figure 1, port 221b of valve 221 through which deflated air from the tyre flows is connected with the EOD 100 to use the air (which is normally discharged to the atmosphere during deflation) for the regeneration of the dryer. Therefore, port 221b is connected to the EOD 100 via line 80 and port 110. As a consequence, all the air deflated from the TPCS would be guided through the dryer 101. Alternatively, a valve may be provided in line 80 which could selectively connect the line 80 to the atmosphere. In that case, air deflated from the TPCS could be discharged to the atmosphere without passing dryer 101 if applicable. This would also have the main advantage that the rotatable passage 240 could be connected to the atmosphere so that the seals on the rotatable passage 240 (not shown) do not contact a non-rotating surface.

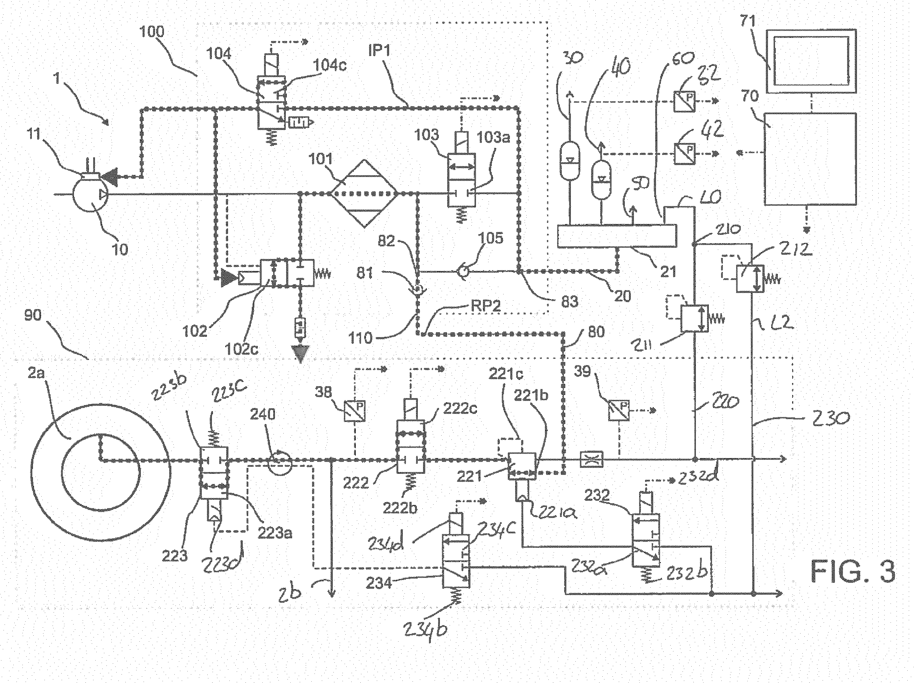

Inside the EOD 100, port 110 is connected to the dryer 101 at connection 82 which is positioned between dryer cartridge 101 and check valve 105 as shown in figure 3.

As shown in Figure 3, for regeneration of dryer 101 air from the TPCS flows along line 80 (indicated with path RP2) while compressor 10 is switched to an idle mode. In the idle mode air flows along path IP1 and opens valve 104 to position 104c so that the compressor 10 does not block regeneration with its higher air flow/pressure level.

Simultaneously, discharge valve 102 is opened to position 102c for connection to the atmosphere so that moisture is discharged to the atmosphere. Valve 103 must be closed (position 103a) as shown in Figure 3 to avoid short circuit with reservoirs 31, 41. Check valve 81 is needed to block air flow in the modes independent of TPCS as described in Figures 2a to 2d.

Alternatively, if reservoirs 31, 41 of the consumer branch 20 are empty (so that the pressure level in path RP2 is higher than the pressure in the consumer branch 20) air from path RP2 could be used to provide air for path IP1. At connection 82 air could flow to check valve 105 and enter path IP1 at connection 83. This would enable the regeneration of the dryer 101 even if the compressor 10 is off or the consumer branch is empty (presuming that tyres can provide sufficient air).

Further functions are provided using air deflated from the tyres as flow regeneration for the dryer 101.

Air volume monitoring

The air needed for regeneration is a default setting. The TPCS system can determine the amount of air released during inflation and deflation as explained above. It can therefore compare the volume of air deflated from the tyre with the volume required for regeneration and calculate if sufficient air has been deflated from the tyre or not.

For example, if 120 litres of air is required for the regeneration of the dryer and the TPCS deflation process deflates the tyre from, for example, 1.8 bar to 1.7 bar, the TPCS will only be able to deliver 100 litres for regeneration. In such a case, the system can also use some of the air in the reservoirs 31, 41 to complete the regeneration.

Compressor deactivation before TPCS

As with regeneration using air from the reservoirs 31, 41, regeneration via the TPCS requires that the compressor 10 is not fully delivering, so the compressor 10 must be brought into an idle mode, or switched off.

Alternatively, the control unit may postpone deflation, for example, if the reservoirs 31, 41 need immediate refilling.

Filling the reservoir after shut down

Most air supply systems suffer from the fact that air is lost during longer periods of shut down of the vehicle, such as overnight. After starting the vehicle again, some initial time is required to fill the consumer reservoirs 31, 41 to be ready for operation.

In accordance with the invention, the tyre is used as an air reservoir for long periods of shut down of the tractor, such as overnight. The system can decide the conditions, that is the pressure of the reservoirs before shut down. If the reservoirs 31, 41 are at a high pressure, the tyres may be inflated to a pressure which is higher than their usual pressure in operation. The tractor can then be shut down.

After restarting the tractor, the tyre is deflated to a desired tyre pressure and the deflated air is used to fill the reservoirs to the desired pressure without using the compressor 10.

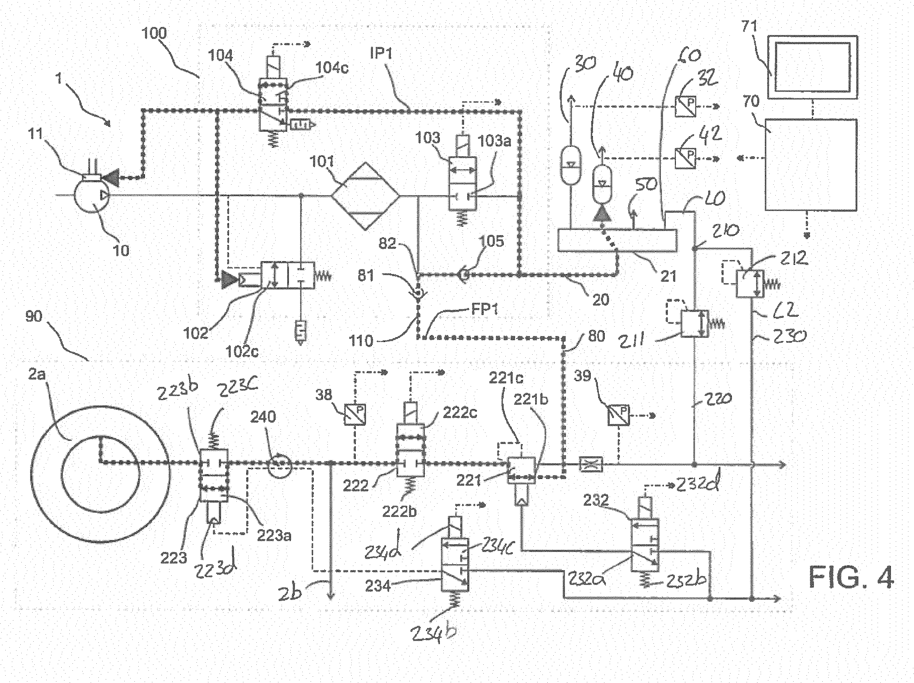

For filling the reservoirs 31, 41 with air from the tyre, the pressure level of the reservoir must be lower than that in the tyre, but sufficient to open valve 223 on the tyre. As shown in figure 4 the air will flow along the path FP1 to reservoir 30 or 40 and towards valve 104.

If compressor 10 is already running, that is the tractor engine is on, then the compressor 10 must be switched to the IDLE MODE by moving valve 104 to open position 104c so that air flows along path IP1.

If the compressor 10 is not running, the pressure in reservoirs 31, 41 must be sufficient to open valve 223 at the tyre. If valve 223 is electrically operated, no initial pressure in the reservoirs is required as pressure from the tyre may be sufficient for operating valve 104. The other valves 103 and 102 will move into the correct positions due to spring biasing when shut down.

Monitoring external filing

If the tyres are inflated by an external source, for example, from a garage compressor, it is possible that humid air is introduced into the tyres. Using the humid air for regeneration in such a case would further worsen the condition of the dryer.

The system can detect external filling since the tyre pressure will increase without activation of the TPCS. The TPCS or control unit 70 stores the desired pressure in the tyres after each TPCS operation, even if the vehicle is shut down. Leakage would result in a tyre pressure decrease but if the tyre pressure has increased, external filling has been provided so that the air may be more humid than required for flow return.

If the TPCS is then deflated and guides the moist air through the dryer 101, no regeneration drying effect is provided since more moisture is brought into the system. As a consequence, the system can decided to conduct regeneration by using air from the TPCS and the reservoirs 31,41, or using air solely from the reservoirs 31, 41, or by conducting an extended regeneration using air from the reservoirs to discharge the additional air brought into the tyres as a consequence of external filling as shown in figure 4.

EOD Dryer provided with port for inserting TPCS

The EOD 100 must be provided with an additional TPCS input port 110 (shown in Figure 3) and check valve 81. The port must be connected to the dryer 101 such that the regeneration valve 103 and check valve 105 can be by-passed as shown in figures 1 and 3.

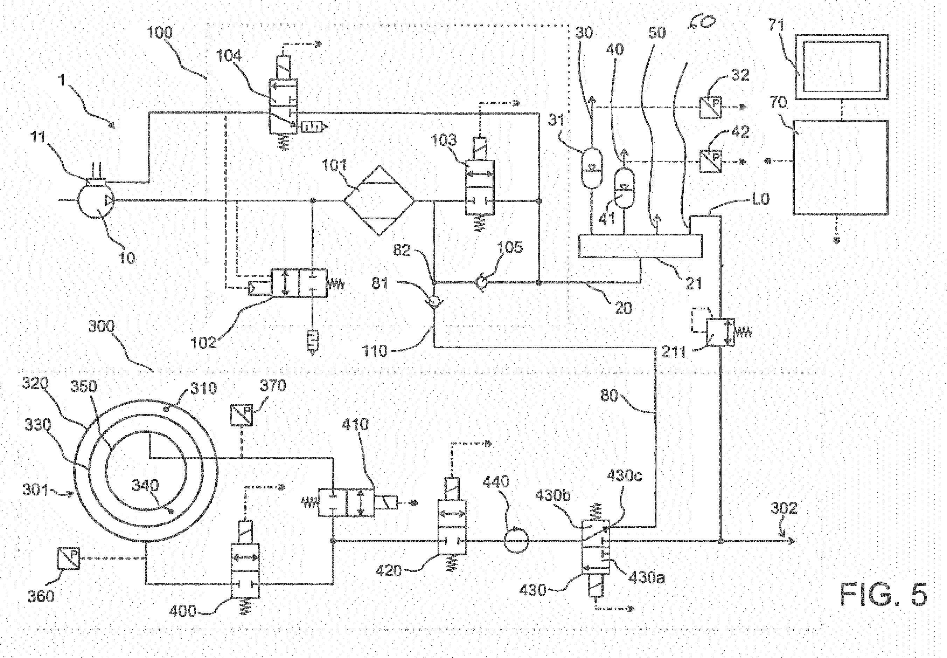

The invention as described above is described with reference to one embodiment of a TPCS. The invention can also be used with alternative embodiments of TPCS, such as the one shown in figure 5. In figure 5, the EOD circuit and components of figures 1 to 4 are shown connected to an alternative TPCS 300 which is described in detail in the applicant's granted patent EP2196336. The wheel 301 of figure 5 is provided with an inner tyre 330 and an outer tyre 320.

A first tyre reservoir 310 is enclosed between the outer tyre 320 and the inner tyre 330 and is mainly used to adjust the pressure of the wheel. A second tyre reservoir 340 is enclosed between inner tyre 330 and the tyre rim 350 and is mainly used to store compressed air at a relatively high pressure (around 6 - 8 bar) which is supplied by the compressor 10 or protection valve means 21. A first sensor 360 is assigned to first tyre reservoir 310 and a second sensor 370 is assigned to second tyre reservoir 340.

TPCS 300 provides a second tyre air reservoir 340 at a higher pressure level compared to the pressure in a first tyre air reservoir 310 wherein both reservoirs are fluidly connectable. In accordance with the present invention, air from the first or second reservoir 310, 340 is used for regeneration and for refilling the reservoirs 31,41 assigned to consumers 30,40 after shut down.

For controlling the functions of the TPCS 300, valves 400, 410, 420 and 430 are provided. Pressure sensors 360 or 370 and valves 400, 410, 420 and 430 can communicate with control unit 70 via wireless communication, or by an electrical rotatable passage (not shown).

A rotatable passage 440 pneumatically connects the rotatable wheel 301 and the components mounted on the wheel 420, 410, 400 to valve 430 which is mounted on the tractor chassis.

The operating conditions of the TPCS of figure 5 are:

### Direct tyre inflation

For inflation of first reservoir 310 directly via compressor 10, consumer branch 20 and line L0, valve 410 is closed (as shown in figure 5) and valves 400, 420 are opened to allow air to flow to reservoir 310. Valve 430 is brought to position 430a so that line 80 is closed and the line to the tyre is open. Pressure sensor 360 is used to monitor the tyre pressure and to stop the inflation process when the desired pressure is reached. Alternatively, characteristic maps may be used to calculate the volume of air required to attain a desired tyre pressure (or, if the air flow rate is known, the inflation time can be calculated).

### Tyre inflation via second tyre reservoir 340

In this mode, valve 420 is closed and valve 430 is moved to a closed position 430b. If valves 400 and 410 are then opened, air can flow from the second reservoir 340 to the first reservoir 310.

### Filling the second tyre reservoir 340

For filling the second reservoir 340 via compressor 10, consumer branch 20 and line L0, valve 400 is closed (as shown) and valves 410, 420 are open. Valve 430 is moved to open position 430a.

### Tyre deflation (reducing pressure in first tyre reservoir 310)

In this mode, valves 400, 420 are open, valve 410 is closed and valve 430 is moved to position 430a. In accordance with the invention, port 430c is connected to port 110 of EOD 100 to guide air back to the EOD 100 or to the reservoirs 31, 41.

With reference to the invention, an air supply system comprising TPCS 300 offers the same functions of regeneration, air volume monitoring, compressor deactivation before TPCS and filling the reservoir after shut down as those previously described for an air supply system comprising TPCS 90.

More specifically:

### Regeneration

For regeneration using air deflated from the wheel 301, valve 410 is closed, valves 400 and 420 are opened and valve 430 is brought into position 430b so that air flows from the first reservoir 310 in the tyre to dryer 101.

Advantageously, regeneration without using air deflated from the tyre can be performed without affecting the pressure of the tyre, that is without affecting the pressure of the first reservoir 310. This performed by deflating air from the second reservoir 340. This is achieved by closing valve 400, opening valves 410, 420 and bringing valve 430 into position 430b so that air can pass from the second reservoir 340 in the tyre to the dryer.

### Filling the reservoir after shut down

TPCS 300 has the advantage that the reservoir 340 holds air at high pressures so that the consumer reservoirs 31, 41 are filled more easily and more quickly than using the air from reservoir 310. This is because the pressure of air in the reservoir 310 is lower than the pressures of consumer reservoirs 31,41. This is especially advantageous for refilling after shut down.

The invention as described in both embodiments permits regeneration of a dryer using air from the consumer reservoirs 31, 41, or using air from the tyre during deflation, or using air from both the tyre and the consumer reservoirs.

The invention is not restricted to the types of TPCS described herein but may be used when air deflated from the tyre is used for the regeneration of a dryer.

### Claims

1. A vehicle (1) comprising an air supply system for supplying air to an on board consumer (30, 40) and a tyre (330), said air supply system comprising an air compressor (10) and a dryer (101) connectable to the tyre (330), and said on board consumer (30, 40) having a respective consumer reservoir (31, 41); **characterised in that** said consumer reservoir (31, 41) is equipped with a respective pressure sensor (32, 42), and **in that** the air supply system is configured to:

   prior to shut down of the vehicle (1), increase the pressure in the tyre (330);
   upon starting the vehicle (1), measure by the pressure sensor (32, 42) the pressure in the consumer reservoir (31, 41); and
   if the pressure in the consumer reservoir (31, 41) is lower than a desired pressure, use deflated air from the tyre (330) to increase the pressure in the consumer reservoir (31,41).

2. A vehicle (1) as claimed in claim 1, **characterised in that** the air supply system is further configured such that, if the pressure measured in the consumer reservoir (31,41) by the pressure sensor (32,42) does not reach the desired pressure in the consumer reservoir (31,41) using the deflated tyre air, the compressor (10) is used to fill the consumer reservoir (31,41) to the desired pressure.

3. A vehicle (1) as claimed in claim 1, **characterised in that** the air supply system is further configured such that the compressor (10) is deactivated during increasing the pressure in the consumer reservoir (31, 41) using deflated air from the tyre (330).

4. A vehicle (1) according any preceding claim comprising a tyre pressure control system circuit (90, 300) and a dryer circuit (100), the dryer circuit (100) comprising the dryer (101), a flow return valve (81) and a port (110), the dryer (101) and the flow return valve (81) are arranged so that air supplied by the compressor (10) to the tyre (330) is dried, the port (110) is connectable to the tyre pressure control system circuit (90, 300) so that air deflated from the tyre (330) through the tyre pressure control system circuit (90, 300) either i) passes through the dryer (101) for regeneration, or ii) is supplied directly to the on board consumer (30, 40) on the vehicle (1).

5. A vehicle (1) as claimed in any preceding claim wherein the air taken from the tyre (330) is provided by a reservoir (340) located within the tyre (330).

**Patentansprüche**

1. Fahrzeug (1) mit einem Luftversorgungssystem zum Versorgen eines bordeigenen Verbrauchers (30, 40) und eines Reifens (330) mit Luft, wobei das Luftversorgungssystem einen Luftkompressor (10) und einen Trockner (101) aufweist, die mit dem Reifen (330) verbindbar sind, und wobei der bordeigene Verbraucher (30, 40) ein entsprechendes Verbraucherreservoir (31, 41) besitzt;
dadurch gekennzeichnet, dass das Verbraucherreservoir (31, 41) mit einem entsprechenden Drucksensor (32, 42) ausgestattet ist, und dass das Luftversorgungssystem konfiguriert ist, um:

vor dem Abschalten des Fahrzeugs (1) den Druck in dem Reifen (330) zu erhöhen;
ab dem Starten des Fahrzeugs (1) den Druck in dem Verbraucherreservoir (31, 41) mittels des Drucksensors (32, 42) zu messen; und
falls der Druck in dem Verbraucherreservoir (31, 41) niedriger als ein gewünschter Druck ist, aus dem Reifen (330) abgelassene Luft zu verwenden, um den Druck in dem Verbraucherreservoir (31, 41) zu erhöhen.

2. Fahrzeug (1) nach Anspruch 1, **dadurch gekennzeichnet, dass** das Luftversorgungssystem weiterhin so konfiguriert ist, dass, falls der in dem Verbraucherreservoir (31, 41) mittels des Drucksensors (32, 42) gemessene Druck unter Verwendung der abgelassene Luft des Reifens nicht den gewünschten Druck in dem Verbraucherreservoir (31, 41) erreicht, der Kompressor (10) verwendet wird, um das Verbraucherreservoir (31, 41) auf den gewünschten Druck aufzufüllen.

3. Fahrzeug (1) nach Anspruch 1, **dadurch gekennzeichnet, dass** das Luftversorgungssystem weiterhin so konfiguriert ist, dass der Kompressor (10) während des Erhöhens des Drucks in dem Verbraucherreservoir (31, 41) unter Verwendung der aus dem Reifen (33) abgelassenen Luft deaktiviert wird.

4. Fahrzeug (1) nach mindestens einem der vorhergehenden Ansprüche, mit einem Reifendruckregelsystemkreislauf (90, 300) und einem Trocknerkreislauf (100), wobei der Trocknerkreislauf (100) den Trockner (101), ein Rücklaufventil (81) und einen Anschluss (110) aufweist, wobei der Trockner (101) und das Rücklaufventil (81) so angeordnet sind, dass dem Reifen (31) durch den Kompressor (10) bereitgestellte Luft getrocknet wird, wobei der Anschluss (110) mit dem Reifendruckregelsystemkreislauf (90, 300) verbindbar ist, sodass die aus dem Reifen (33) durch den Reifendruckregelsystemkreislauf (90, 300) abgelassene Luft entweder

i) für eine Regeneration durch den Trockner (101) geführt, oder
ii) direkt dem bordeigenen Verbraucher (30, 40) an dem Fahrzeug (1) zugeführt wird.

5. Fahrzeug (1) nach mindestens einem der vorhergehenden Ansprüche, wobei die aus dem Reifen (330) abgelassene Luft durch ein in dem Reifen (330) angeordnetes Reservoir (340) bereitgestellt wird.

**Revendications**

1. Véhicule (1) comprenant un dispositif d'alimentation en air destiné à délivrer de l'air à un consommateur de bord (30, 40) et un pneu (330), ledit dispositif d'alimentation en air comprenant un compresseur d'air (10) et un dispositif de séchage (101) pouvant être raccordés au pneu (330), et ledit consommateur de bord (30, 40) comportant un réservoir de consommateur (31, 41) respectif ;
**caractérisé en ce que** ledit réservoir de consommateur (31, 41) est équipé d'un capteur de pression (32, 42) respectif, et **en ce que** le dispositif d'alimentation en air est configuré de manière à :

avant d'arrêter le véhicule (1), augmenter la pression dans le pneu (330) ;
lors du démarrage du véhicule (1), mesurer, avec le capteur de pression (32, 42), la pression dans le réservoir de consommateur (31, 41) ; et

si la pression dans le réservoir de consommateur (31, 41) est inférieure à une pression désirée, utiliser l'air de dégonflage du pneu (330) afin d'augmenter la pression dans le réservoir de consommateur (31, 41).

2. Véhicule (1) selon la revendication 1, **caractérisé en ce que** le dispositif d'alimentation en air est, en outre, configuré de telle sorte que, si la pression mesurée dans le réservoir de consommateur (31, 41) par le capteur de pression (32, 42) n'atteint pas la pression désirée dans le réservoir de consommateur (31, 41) en utilisant l'air de dégonflage de pneu, le compresseur (10) est utilisé afin de remplir le réservoir de consommateur (31, 41) à la pression désirée.

3. Véhicule (1) selon la revendication 1, **caractérisé en ce que** le dispositif d'alimentation en air est, en outre, configuré de telle sorte que le compresseur (10) est désactivé au cours de l'augmentation de la pression dans le réservoir de consommateur (31, 41) en utilisant l'air de dégonflage provenant du pneu (330).

4. Véhicule (1) selon l'une quelconque des revendications précédentes, comprenant un circuit de dispositif de commande de pression de pneu (90, 300) et un circuit de dispositif de séchage (100), le circuit de dispositif de séchage (100) comprenant le dispositif de séchage (101), une vanne de retour de fluide (81) et un orifice de service (110), le dispositif de séchage (101) et la vanne de retour de fluide (81) sont agencés de telle sorte que de l'air délivré par le compresseur (10) au pneu (330) est séché, l'orifice de service (110) peut être raccordé au circuit de dispositif de commande de pression de pneu (90, 300) de telle sorte que l'air de dégonflage du pneu (330) par l'intermédiaire du circuit de dispositif de commande de pression de pneu (90, 300) soit i) passe à travers le dispositif de séchage (101) pour sa régénération, soit ii) est délivré directement au consommateur de bord (30, 40) sur le véhicule (1).

5. Véhicule (1) selon l'une quelconque des revendications précédentes, dans lequel l'air prélevé sur le pneu (330) est délivré par un réservoir (340) situé à l'intérieur du pneu (330).

FIG. 1

FIG. 2a

FIG. 2b

FIG. 2d

FIG. 2c

FIG. 3

FIG. 4

FIG. 5

16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015028170 A
- DE 102012106549 A1
- WO 2015028214 A
- EP 2196336 A